(19) Europäisches Patentamt / European Patent Office / Office européen des brevets

(11) EP 3 455 046 B1

(12) **EUROPEAN PATENT SPECIFICATION**

(45) Date of publication and mention of the grant of the patent:
**09.12.2020 Bulletin 2020/50**

(21) Application number: **17724423.3**

(22) Date of filing: **12.05.2017**

(51) Int Cl.:
***B29C 45/00*** *(2006.01)* ***B29K 105/26*** *(2006.01)*
***B29K 509/00*** *(2006.01)* ***B29B 17/00*** *(2006.01)*
***C08K 9/04*** *(2006.01)* ***B29C 67/24*** *(2006.01)*

(86) International application number:
**PCT/GB2017/051340**

(87) International publication number:
**WO 2017/194969 (16.11.2017 Gazette 2017/46)**

(54) **METHOD OF MANUFACTURING AN ARTICLE BY INJECTION MOULDING, SUITABLE POLYMER RESIN FOR THE SAME AND PRODUCT**

VERFAHREN ZUR HERSTELLUNG EINES ARTIKELS DURCH SPRITZGIESSEN, DAZU VERWENDBARES POLYMERHARZ UND PRODUKT

PROCÉDÉ DE FABRICATION D'UN OBJET PAR MOULAGE PAR INJECTION, RÉSINE POLYMÈRE UTILISABLE DANS CE BUT ET PRODUIT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.05.2016 GB 201608480**
**05.10.2016 GB 201616913**
**05.10.2016 GB 201616914**

(43) Date of publication of application:
**20.03.2019 Bulletin 2019/12**

(73) Proprietor: **IMERTECH SAS**
**75015 Paris (FR)**

(72) Inventor: **REBIH, Fatima**
**31000 Toulouse (FR)**

(74) Representative: **Haseltine Lake Kempner LLP**
**Redcliff Quay**
**120 Redcliff Street**
**Bristol BS1 6HU (GB)**

(56) References cited:
**EP-A1- 1 495 074** **EP-A1- 2 610 290**
**EP-A2- 2 159 041** **WO-A1-2016/042306**
**WO-A2-2016/038110** **US-A1- 2013 046 034**

- **TABTIANG A ET AL: "The performance of selected unsaturated coatings for calcium carbonate filler in polypropylene", EUROPEAN POLYMER JOUR, PERGAMON PRESS LTD. OXFORD, GB, vol. 36, no. 1, 1 January 2000 (2000-01-01), pages 137-148, XP004243631, ISSN: 0014-3057, DOI: 10.1016/S0014-3057(99)00055-5**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 455 046 B1

## Description

### TECHNICAL FIELD

The present invention is directed to a method of manufacturing an article by injection moulding, to use of a compatibilizer in an article, to use of a compatibilizer in a polymer resin, and to a polymer resin.

### BACKGROUND OF THE INVENTION

In recent years, the recycling of polymer waste material has come to the fore. However, the recycling of polymer waste material has presented challenges which are not necessarily encountered during the preparation of polymer compositions derived from virgin polymer. EP 2 610 290 A1 discloses polymer compositions, for example, recycled polymer compositions, processes for the production thereof, functional filler for use in said compositions and articles formed from the polymer compositions. WO 2016/038110 A2 discloses polymer compositions comprising at least two polyethylene polymers, for example, recycled polymer compositions, methods for the production thereof, the use of functional fillers in said compositions and articles formed from the polymer compositions. WO 2016/042306 A1 discloses a composition comprising a thermoplastic polymer, cellulosic material and a functional filler, a composite formed therefrom, a masterbatch from which the composition may be formed, a method of making the composition and composite, and uses of the functional filler in a composition comprising thermoplastic polymer and cellulosic material. EP 1 495 074 A1 discloses techniques for creating recycled plastic materials from waste plastic materials. US 2013/046034 A1 discloses a process for creating polyolefin blends from waste streams with controlled rheological properties.

As the need to recycle polymer waste materials increases, there is a continuing need for the development of new methods and compositions for the economically viable processing of polymer waste materials into high quality polymer resins and articles of manufacture, such as a portable waste or refuse container, for example, a wheelie bin.

### SUMMARY OF THE INVENTION

According to a first aspect, there is provided a method of manufacturing an article by injection moulding, the method comprising injection moulding an article from a polymer resin, wherein the polymer resin comprises different types of recycled polymer and a compatibilizer comprising inorganic particulate material and a surface treatment agent on a surface of the inorganic particulate material, and wherein the polymer resin has a MFI @ 2.16 kg/190 °C of equal to or greater than 3.0 g/10 min.

According to another aspect, there is provided an article obtainable by the method according to the first aspect above, or manufactured by injection moulding a polymer resin according to the aspect below.

Described herein is the use of a compatibilizer in an article, wherein the article is manufactured by injection moulding a polymer resin comprising the compatibilizer, to eliminate tiger stripes, or to reduce tiger stripes compared to an article comprising the polymer resin absent the compatibilizer and/or compared to an article which is manufactured by injection moulding a polymer resin in which the compatibilizer has been replaced by a polymer-based compatibilizer, wherein the compatibilizer comprises inorganic particulate material and a surface treatment agent on a surface of the inorganic particulate material, wherein the polymer resin comprises different types of recycled polymer and wherein the polymer resin comprising the compatibilizer has a MFI @ 2.16 kg/190 °C of equal to or greater than 3.0 g/10 min.

Described herein is the use of a compatibilizer in a polymer resin to (i) eliminate the occurrence of tiger stripes in an article manufactured from the polymer resin by injection moulding, or (ii) reduce the occurrence of tiger stripes compared to an article manufactured from the polymer resin absent the compatibilizer and/or compared to an article which is manufactured by injection moulding a polymer resin in which the compatibilizer has been replaced by a polymer-based compatibilizer, wherein the compatibilizer comprises inorganic particulate material and a surface treatment agent on a surface of the inorganic particulate material, wherein the polymer resin comprises different types of recycled polymer and wherein the polymer resin comprising the compatibilizer has a MFI @ 2.16 kg/190 °C of equal to or greater than 3.0 g/10 min.

Described herein is the use of a compatibilizer in an article, wherein the article is manufactured by injection moulding a polymer resin comprising the compatibilizer, to:

(A) provide a balance of toughness and stiffness which is superior compared to (i) an article which is manufactured by injection moulding the polymer resin absent the compatibilizer, or (ii) an article which is manufactured by injection moulding a polymer resin in which the compatibilizer has been replaced by a polymer-based compatibilizer, or
(B) optimize the balance between the toughness and stiffness of the article; wherein:
the compatibilizer comprises inorganic particulate material and a surface treatment agent on a surface of the inorganic particulate material, wherein the polymer resin comprises different types of recycled polymer and wherein the polymer

resin comprising the compatibilizer has a MFI @ 2.16 kg/190 °C of equal to or greater than 3.0 g/10 min.

Described here is the use of a compatibilizer in a polymer resin from which an article is manufactured by injection moulding to:

(A) provide a balance of toughness and stiffness which is superior compared to (i) an article which is manufactured by injection moulding the polymer resin absent the compatibilizer, or (ii) an article which is manufactured by injection moulding a polymer resin in which the compatibilizer has been replaced by a polymer-based compatibilizer, or
(B) optimize the balance between the toughness and stiffness of the article; wherein:
the compatibilizer comprises inorganic particulate material and a surface treatment agent on a surface of the inorganic particulate material, wherein the polymer resin comprises different types of recycled polymer and wherein the polymer resin comprising the compatibilizer has a MFI @ 2.16 kg/190 °C of equal to or greater than 3.0 g/10 min.

According to a further aspect, there is provided a polymer resin suitable for use in the manufacture of an article therefrom by injection moulding, wherein the polymer resin comprises a mixture of different recycled polymers and from about 5 wt. % to about 20 wt. % compatibilizer comprising inorganic particulate material and a surface treatment agent on a surface of the inorganic particulate material, based on the total weight of the polymer resin, wherein the polymer resin has a MFI @ 2.16 kg/190 °C of equal to or greater than 3.0 g/10 min, and wherein the polymer resin comprises at least about 50 wt. % recycled polyethylene, based on the total weight of the polymer composition, and from about 10 wt. % to about 30 wt. % recycled polypropylene, based on the total weight of the polymer resin.

## BRIEF DESCRIPTION OF THE DRAWINGS

Figure 1 is a photograph of an article that has been manufactured by injection moulding a polymer resin comprising a polymer-based compatibilizer.

Figure 2 is a photograph of an article that has been manufactured by injection moulding a polymer resin according to the present invention.

## DESCRIPTION OF THE INVENTION

Manufacturing plastics from mixed polymer feeds, such as recycled polymers, can be challenging owing to incompatibilities between different polymer times, e.g., immiscibility between polyethylene and polypropylene. Efforts to improve compatibility can be hampered owing to a tension between different mechanical properties of plastics made from such mixed polymer feeds. More particularly, it can be challenging to balance properties such as strength and stiffness in the final product, such as those formed by injection moulding. The present inventors have surprisingly found that a balance or optimization of mechanical properties such as strength and stiffness is achievable through use of compatibilizers comprising an inorganic particulate material and a surface treatment agent on a surface of the inorganic particulate material.

*Polymer resin*

The polymer resin of the present invention comprises different types of recycled polymer and a compatibilizer comprising inorganic particulate material and a surface treatment agent on a surface of the inorganic particulate material.
In certain embodiments, the polymer resin comprises polyethylene and polypropylene, or a mixture of different types of polyethylene (e.g., HDPE, LDPE and/or LLDPE) and polypropylene, or a mixture of different types of HDPE and polypropylene.
In certain embodiments, the polymer resin comprises polypropylene in an amount of no more than about 90 wt.%, for example, no more than about 80 wt.%, or no more than about 70 wt.%, or no more than about 60 wt.%, or no more than about 50 wt.%, or no more than about 40 wt.%, or no more than about 35 wt.%, or no more than about 30 wt.%.
Unless otherwise stated, the amounts of polymer resin components described herein are based on the total weight of the polymer resin.
In certain embodiments, the polymer resin comprises from 20-40 % by weight polypropylene, for example, from 20-35 % by weight polypropylene, or from 23-30 % by weight polypropylene, or 23-28 % by weight polypropylene.
In certain embodiments, all of the polypropylene in the polymer resin is recycled polypropylene.
In certain embodiments, all or at least a portion of, for example, at least 50 %, or at least 75 %, or at least about

90 %, or at least 90 %, or at least 95 %, or at least 99 %, or at least 99.9 % of the polypropylene is derived from a mixed recycled polyolefin stream comprising polypropylene.

In certain embodiments, the polymer resin comprises polyethylene in an amount of at least about 10 wt.%, for example, at least about 20 wt.%, or at least about 30 wt.%, or at least about 40 wt.%, or at least about 50 wt.%, or at least about 60 wt.%. In certain embodiments, the polymer resin comprises a major amount of polyethylene, wherein a major amount is defined as an amount in excess of 50 wt.%. In certain embodiments, the polymer resin comprises polyethylene in an amount of no more than about 90 wt.%, for example, no more than about 80 wt.%, or no more than about 75 wt.%, or no more than about 60 wt.%, or no more than about 50 wt.%, or no more than about 40 wt.%, or no more than about 30 wt.%. In certain embodiments, the polymer resin comprises polyethylene in an amount of about 50-80 wt.%, for example, about 60-75 wt.%.

The polyethylene may comprise at least two different types of polyethylene, for example, at least two different types of recycled polyethylene, for example, a recycled HDPE and at least one other type of polyethylene, e.g., HDPE, from another recycled source.

In certain embodiments, the polymer resin comprises a mixture of different types of polyethylene, e.g., HDPE, LDPE and/or LLDPE. Generally, HDPE is understood to be a polyethylene polymer mainly of linear, or unbranched, chains with relatively high crystallinity and melting point, and a density of about 0.96 g/cm$^3$ or more. Generally, LDPE (low density polyethylene) is understood to be a highly branched polyethylene with relatively low crystallinity and melting point, and a density of from about 0.91 g/cm$^3$ to about 0.94 g/cm$^3$. Generally, LLDPE (linear low density polyethylene) is understood to be a polyethylene with significant numbers of short branches, commonly made by copolymerization of ethylene with longer-chain olefins. LLDPE differs structurally from conventional LDPE because of the absence of long chain branching.

In certain embodiments, the polymer resin comprises two different types of HDPE, wherein each type of HDPE is present in an amount of from 20 to 40 wt.% based on the total weight of the polymer resin. In certain embodiments the first type of HDPE is present in an amount of from 20 to 30 wt.%, and the second type of HDPE is present in an amount of from 30 to 40 wt.%. In certain embodiments, both types of HDPE are derived from recycled polymer sources, such as post-consumer polymer waste.

In certain embodiments, at least 75 % by weight, for example; 90-99 % by weight, of the polymer in the polymer resin is a mixture of polyethylene and polypropylene, for example, a mixture of HDPE and polypropylene (based on the total weight of polymer in the resin composition). In certain embodiments, all of the polymer in the polymer resin is polyethylene or polypropylene.

In certain embodiments, the HDPE, when present, is a mixture of HDPE from different sources, for example, from different types of post-consumer polymer waste, e.g., recycled blow-moulded HDPE and/or recycled injection moulded HDPE.

In certain embodiments, all or at least a portion of (e.g., at least 50 %, or at least 75 %, or at least about 90 %, or at least 90 %, or at least 95 %, or at least 99 %, or at least 99.9 %) the polymeric component of the polymer resin is derived from polymer waste, for example, post-consumer polymer waste, post-industrial polymer waste, and/or post-agricultural waste polymer. In certain embodiments, all or at least a portion of (e.g., at least 50 %, or at least 75 %, or at least about 90 %, or at least 90 %, or at least 95 %, or at least 99 %, or at least 99.9 %) the polymeric component of the polymer resin is or is derived from, recycled post-consumer polymer waste.

In certain embodiments, the polyethylene, for example, HDPE, has an MFI @ 2.16 kg/190 °C of equal to or less than about 5.0 g/min, for example, from about 1.0 g/min to 5.0 g/min, or from about 2.0 g/min to about 5.0 g/min, or from about 3.0 g/min to about 5.0 g/min. In certain embodiments in which the polymer resin comprises two more types of polyethylene, for example, two or more types of HDPE, the MFI @ 2.16 kg/190 °C of the two or more polyethylenes may vary by no greater than about 3.0 g/min, for example, by no more than about 2.0 g/min, or by no more than about 1.5 g/min.

In certain embodiments, the polypropylene has an MFI @ 2.16 kg/190 °C of equal to or greater than about 5.0 g/min, for example, from about 5.0 g/10 min to about 10 g/min, or from about 5.0 g/min to about 9.0 g/min, or from about 5.0 g/min to about 8.0 g/min, or from about 5.0 g/min to about 7.5 g/min, or from about 5.5 g/min to about 7.0 g/min, or from about 6.0 g/min to about 7.0 g/min.

In certain embodiments, the polymer resin comprises no more than about 20 % by weight of virgin polymer, based on the total weight of the resin composition, for example, no more than about 10 % by weight of virgin polymer, or no more than about 5 % by weight of virgin polymer, or no more than about 1 % by weight of virgin polymer, or no more than about 0.1 % by weight of virgin polymer.

In certain embodiments, the polymer resin is substantially free of virgin polymer, for example, the polymer resin is free of virgin polymer.

In certain embodiments, all of the polymer in the resin composition is recycled polymer, e.g., derived from polymer waste such as, for example, post-consumer waste.

In certain embodiments, the polymer resin (i.e., comprising the compatibilizer and additional optional components) has a density of greater than about 0.925 g/$cm^3$, for example, equal to or greater than about 0.95 g/$cm^3$, or equal to or greater than about 0.975 g/$cm^3$, or equal to or greater than about 1.00 g/$cm^3$. In certain embodiments, the density is no greater than about 1.25 g/$cm^3$, for example, no greater than about 1.10 g/$cm^3$, or no greater than about 1.05 g/$cm^3$. Density may be determined in accordance with ISO 1183.

For use in certain applications, for example, a wheelie bin application, the polymer resin must meet specific requirements in terms of, for example, MFI (melt flow index). One such requirement is that the polymer resin must have a MFI @ 2.16 kg/190 °C of equal to or greater than 3.0 g/10 min.

MFI, as referred to herein, is determined in accordance with ISO 1133.

The polymer resin of the present invention has a MFI @ 2.16 kg/190 °C of equal to or greater than 3.0 g/10 min. In certain embodiments, the polymer resin has a MFI @ 2.16 kg/190 °C of equal to or greater than about 3.1 g/10 min, for example, equal to or greater than about 3.2 g/10 min, or equal to or greater than about 3.3 g/10 min, or equal to or greater than about 3.4 g/10 min, or equal to or greater than about 3.5 g/10 min.

In certain embodiments, the polymer resin has a MFI @ 5.0 kg/230 °C of equal to or greater than about 5 g/10 min, for example, equal to or greater than about 6 g/10 min, or equal to or greater than about 6.5 g/10 min, or equal to or greater than about 6.7 g/10 min, or equal to or greater than about 6.9 g/10 min.

In certain embodiments, the polymer resin comprises from 40-95 % by weight polypropylene, for example, from 60-95 % by weight polypropylene, or from 65-95 % by weight polypropylene. In certain embodiments, the polymer resin comprises from 40-70 % by weight polypropylene, for example, from 60-70 % by weight polypropylene, or from 65-70 % by weight polypropylene. In such embodiments, the polymer resin may comprise a peroxide-containing additive, for example, a peroxide-containing additive in the amounts described herein. In such embodiments, the polymer resin may comprise up to about 30 % by weight polyethylene, for example, from about 20-30 % by weight polyethylene, or from about 20-25 % by weight polyethylene. The polyethylene may be HDPE. In such embodiments, all of the polypropylene and polyethylene may be recycled polypropylene and polyethylene. In such embodiments, the polypropylene may have an MFI @ 2.16 kg/190 °C of equal to or greater than 5.0 g/10 min, for example from about 5.0 g/10 min to about 10 g/min, or from about 5.0 g/min to about 8.0 g/min, or form about 6.0 g/min to about 7.0 g/min. In such embodiments, the polyethylene, for example, HDPE, may have an MFI @ 2.16 kg/190 °C of equal to or less than about 2.0 g/min, for example, equal to or less than about 1.0 g/min, or from about 0.1 g/min to about 0.8 g/min, or from about 0.2 g/min to about 0.7 g/min, or from about 0.4 g/min to about 0.6 g/min.

In certain embodiments, the resin composition further comprises antioxidant, for example, in an amount of less than about 5 wt.%, for example, less than about 1 wt.%. In certain embodiments, the resin composition further comprises antioxidant, for example, in an amount of from about 0.1-1 wt.%, or from about 0.1-0.5 wt.%, or about 0.3 wt.%.

In certain embodiments, the polymer resin comprises a mixture of different recycled polymers and from about 5 wt. % to about 20 wt. % compatibilizer comprising inorganic particulate material and a surface treatment agent on a surface of the inorganic particulate material, based on the total weight of the polymer resin, wherein the polymer resin has a MFI @ 2.16 kg/190 °C of equal to or greater than 3.0 g/10 min, and wherein the polymer resin comprises at least about 50 wt. % recycled polyethylene (which may be a mixture of at least two different types of HDPE), based on the total weight of the polymer composition, and from about 10 wt. % to about 30 wt. % recycled polypropylene, based on the total weight of the polymer composition, and optionally up to about 10 wt. % impact modifier, and optionally up to about 1.0 wt. % antioxidant. In this embodiment the polymer resin is suitable for use in the manufacture of an article therefrom by injection moulding. In certain embodiments, the polymer resin comprises from about 50-70 wt. % polyethylene (which may be a mixture of at least two different types of HDPE), 20-30 wt. % polypropylene, 5-15 wt. % compatibilizer, and optionally from about 1-7.5 wt. % impact modifier, and optionally up to about 0.5 wt. % antioxidant.

The polymer resin, as defined herein, may be prepared by any known suitable manufacturing method. In certain embodiments, the polymer resin is prepared via melt mixing the relevant blend of components with an extruder, such as a Coperion ZSK[18] twin-screw extruder (18 mm diameter). The screw speed may be set to 800 rpm and the feed rate at 8.0 kg/hr. In such embodiments, the hot extrudates may then be immediately quenched in water and pelletized.

*Compatibilizer*

The polymer resin of the invention comprises a compatibilizer comprising inorganic particulate material and a surface treatment agent on a surface of the inorganic particulate material.

The compatibilizer may be present in the polymer resin in an amount ranging from about 1 % up to about 45 % by weight, based on the total weight of the polymer resin. For example, from about 2 % to about 40 % by weight, or from about 3 % to about 35 % by weight, or from about 4 % to about 30 % by weight, or from about 5 % to about 30 % by weight, or from about 5 % to about 25 % by weight, or from about 5 % to about 20 % by weight, or from about 5 % to about 15 % by weight, or from about 5 % to about 10 % by weight, or from about 7 % to about 13 %, or from about 8 % to about 12 % by weight, based on the total weight of the polymer resin.

The surface treatment agent (i.e., coupling modifier) may be present in the polymer resin in an amount of from

about 0.01 % by weight to about 4 % by weight, based on the total weight of the polymer resin, for example, from about 0.02 % by weight to about 3.5 % by weight, or from about 0.05 % by weight to about 1.4 % by weight, or from about 0.1 % by weight to about 0.7 % by weight, or from about 0.15 % by weight to about 0.7 % by weight, or from about 0.3 % by weight to about 0.7 % by weight, or from about 0.5 % by weight to about 0.7 % by weight, or from about 0.02 % by weight to about 0.5 %, or from about 0.05 % by weight to about 0.5 % by weight, or from about 0.1 % by weight to about 0.5 % by weight, or from about 0.15 % by weight to about 0.5 % by weight, or from about 0.2 % by weight to about 0.5 % by weight, or from about 0.3 % by weight to about 0.5 % by weight, based on the total weight of the polymer resin. In certain embodiments, the surface treatment agent comprises a first compound including a terminating propanoic group or ethylenic group with one or two adjacent carbonyl groups. The surface treatment agent may be coated on the surface of the inorganic particulate. A purpose of the surface treatment agent (e.g., coating) is to improve the compatibility of the inorganic particulate material and the polymer matrix with which it is to be combined, and/or improve the compatibility of two or more different polymers in a or the polymer resin by cross-linking or grafting the different polymers. In recycled polymer resins comprising recycled and optionally virgin polymer, the inorganic particulate material coating may serve to cross-link or graft the different polymers. Without wishing to be bound by theory, it is believed that coupling involves a physical (e.g., steric) and/or chemical (e.g., chemical bonding, such as covalent or van der Waals) interaction between the polymers and the surface treatment agent.

In one embodiment, the surface treatment agent (i.e., coupling modifier) has a formula (1):

$$A\text{-}(X\text{-}Y\text{-}CO)_m(O\text{-}B\text{-}CO)_nOH \qquad (1)$$

wherein

A is a moiety containing a terminating ethylenic bond with one or two adjacent carbonyl groups;
X is O and m is 1 to 4 or X is N and m is 1;
Y is $C_{1-18}$-alkylene or $C_{2-18}$-alkenylene;
B is $C_{2-6}$-alkylene; n is 0 to 5;

provided that when A contains two carbonyl groups adjacent to the ethylenic group, X is N.

In an embodiment, A-X- is the residue of acrylic acid, optionally wherein $(O\text{-}B\text{-}CO)_n$ is the residue of δ-valerolactone or ε-caprolactone or a mixture thereof, and optionally wherein n is zero.

In another embodiment, A-X- is the residue of maleimide, optionally wherein $(O\text{-}B\text{-}CO)_n$ is the residue of δ-valerolactone or ε-caprolactone or a mixture thereof, and optionally wherein n is zero.

Specific examples of coupling modifiers are β-carboxy ethylacrylate, β-carboxyhexylmaleimide, 10-carboxydecylmaleimide and 5-carboxy pentyl maleimide.

Exemplary coupling modifiers and methods of preparation are described in US-A-7732514.

In another embodiment, the coupling modifier is β-acryloyloxypropanoic acid or an oligomeric acrylic acid of the formula (2):

$$CH_2{=}CH\text{-}COO[CH_2\text{-}CH_2\text{-}COO]_nH \qquad (2)$$

wherein n represents a number from 1 to 6.

In an embodiment, n is 1, or 2, or 3, or 4, or 5, or 6.

The oligomeric acrylic acid of formula (2) may be prepared by heating acrylic acid in the presence of 0.001 to 1% by weight of a polymerization inhibitor, optionally under elevated pressure and in the presence of an inert solvent, to a temperature in the range from about 50 °C to 200 °C. Exemplary coupling modifiers and their methods of preparation are described in US-A-4267365.

In another embodiment, the coupling modifier is β-acryloyloxypropanoic acid. This species and its method of manufacture is described in US-A-3888912.

The surface treatment agent/coupling modifier is present in the compatibilizer in an amount effective to achieve the desired result. This will vary between coupling modifiers and may depend upon the precise composition of the inorganic particulate. For example, the coupling modifier may be present in an amount equal to or less than about 5 wt. % based on the total weight of the compatibilizer, for example equal to or less than about 2 wt. % or, for example equal to or less than about 1.5 wt. %. In an embodiment, the coupling modifier is present in the compatibilizer in an amount equal to or less than about 1.2 wt.% based on the total weight of the compatibilizer, for example equal to or less than about 1.1 wt. %, for example equal to or less than about 1.0 wt. %, for example, equal to or less than about 0.9 wt. %, for example equal to or less than about 0.8 wt. %, for example equal to or less than about 0.7 wt. %, for example, less than or equal to about 0.6 wt. %, for example equal to or less than about 0.5 wt %, for example equal to or less than about 0.4 wt. %, for example equal to or less than about 0.3 wt. %, for example equal to or less than about 0.2 wt. %

or, for example less than about 0.1 wt. %. Typically, the coupling modifier is present in the compatibilizer in an amount greater than about 0.05 wt. %. In further embodiments, the coupling modifier is present in the compatibilizer in an amount ranging from about 0.1 to 2 wt. % or, for example, from about 0.2 to about 1.8 wt. %, or from about 0.3 to about 1.6 wt. %, or from about 0.4 to about 1.4 wt. %, or from about 0.5 to about 1.3 wt. %, or from about 0.6 to about 1.2 wt. %, or from about 0.7 to about 1.2 wt. %, or from about 0.8 to about 1.2 wt. %, or from about 0.8 to about 1.1 wt. %.

In certain embodiments, a compound/compounds including a terminating propanoic group or ethylenic group with one or two adjacent carbonyl groups is/are the sole species present in the surface treatment agent.

In certain embodiments, the surface treatment agent additionally comprises a second compound selected from the group consisting of one or more fatty acids and one or more salts of fatty acids, and combinations thereof.

In one embodiment, the one or more fatty acids is selected from the group consisting of lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, $\alpha$-linolenic acid, arachidonic acid, eicosapentaenoic, erucic acid, docosahexaenoic acid and combinations thereof. In another embodiment, the one or more fatty acids is a saturated fatty acid or an unsaturated fatty acid. In another embodiment, the fatty acid is a $C_{12}$-$C_{24}$ fatty acid, for example, a $C_{16}$-$C_{22}$ fatty acid, which may be saturated or unsaturated. In one embodiment, the one or more fatty acids is stearic acid, optionally in combination with other fatty acids.

In another embodiment, the one or more salts of a fatty acid is a metal salt of the aforementioned fatty acids. The metal may be an alkali metal or an alkaline earth metal or zinc. In one embodiment, the second compound is calcium stearate.

The second compound, when present, is present in the compatibilizer in an amount effective to achieve the desired result. This will vary between coupling modifiers and may depend upon the precise composition of the inorganic particulate. For example, the second compound may be present in an amount equal to or less than about 5 wt. % based on the total weight of the compatibilizer, for example equal to or less than about 2 wt. % or, for example equal to or less than about 1 wt. %. In an embodiment, the second compound is present in the compatibilizer in an amount equal to or less than about 0.9 wt.% based on the total weight of the compatibilizer, for example equal to or less than about 0.8 wt. %, for example equal to or less than about 0.7 wt. %, for example, less than or equal to about 0.6 wt. %, for example equal to or less than about 0.5 wt %, for example equal to or less than about 0.4 wt. %, for example equal to or less than about 0.3 wt. %, for example equal to or less than about 0.2 wt. % or, for example equal to or less than about 0.1 wt. %. Typically, the second compound, if present, is present in the compatibilizer in an amount greater than about 0.05 wt. %. The weight ratio of the coupling modifier to the second compound may be from about 5:1 to about 1:5, for example, from about 4:1 to about 1:4, for example, from about 3:1 to about 1:3, for example, from about 2:1 to about 1:2 or, for example, about 1:1. The amount of coating, comprising the first compound (i.e., the coupling modifier) and the second compound (i.e., the one more fatty acids or salts thereof), may be an amount which is calculated to provide a monolayer coverage on the surface of the inorganic particulate. In embodiments, the weight ratio of the first compound to the second compound is from about 4:1 to about 1:3, for example from about 4:1 to about 1:2, for example from about 4:1 to about 1:1, for example from about 4:1 to about 2:1, for example, from about 3.5:1 to about 1:1, for example from about 3.5:1 to 2:1 or, for example, from about 3.5:1 to about 2.5:1

In certain embodiments, the surface treatment agent does not comprise a compound selected from the group consisting of one or more fatty acids and one or more salts of a fatty acid.

In certain embodiments, the surface agent is or comprises an organic linker on a surface of the inorganic particulate. The organic linker has an oxygen-containing acid functionality. The organic linker is a basic form of an organic acid. By "basic form" is meant that the organic acid is at least partially deprotonated, e.g., by dehydrating an organic acid to form the corresponding oxyanion. In certain embodiments, the basic form of an organic acid is the conjugate base of the organic acid. The organic acid (and, thus, the organic linker) comprises at least one carbon-carbon double bond.

In certain embodiments, the organic linker is a non-polymeric species and, in certain embodiments, has a molecular mass of no greater than about 400 g/mol. By "non-polymeric" is meant a species which (i) is not formed by the polymerization of monomeric species, and/or (ii) has a relatively low molecular mass, e.g., a molecular mass of less than about 1000 g/mol, for example, a molecular mass of no greater than about 400 g/mol, and/or (iii) comprises no more than 70 carbon atoms in a carbon chain, for example, no more than about 25 carbon atoms in a carbon chain.

In certain embodiments, the non-polymeric species has a molecular mass of no greater than about 800 g/mol, or no greater than about 600 g/mol, or no greater than about 500 g/mol, or no greater than about 400 g/mol, or no greater than about 300 g/ mol, or no greater than about 200 g/mol. Alternatively or additionally, in certain embodiments, the non-polymeric species comprises no more than about 50 carbon atoms, or no more than about 40 carbon atoms, or no more than about 30 carbon atoms, or no more than about 25 carbon atoms, or no more than about 20 carbon atoms, or no more than about 15 carbon atoms.

In certain embodiments, the compatibilizer comprises particulate and an organic linker (serving as the coupling modifier) on a surface of the particulate, the compatibilizer being obtained by at least partially dehydrating an organic

acid having an oxygen-containing acid functionality and comprising at least one carbon-carbon double bond in the presence of the particulate.

An exemplary organic acid is a carboxylic acid, and its basic form a carboxylate, e.g.,

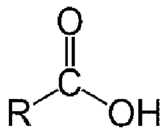 and 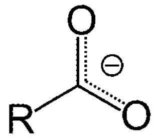 ,

respectively, wherein R is an unsaturated $C_{2+}$ group containing at least one carbon-carbon double bond. The carboxylate group (which is an oxyanion) is depicted in resonance form. The carboxylate group is an example of a conjugate base. In certain embodiments, R is an unsaturated $C_{3+}$ group, or an unsaturated $C_{4+}$ group, or an unsaturated $C_{5+}$ group.

Without wishing to be bound by theory, it is believed that the basic form of the acid functionality coordinates/associates with the surface of the particulate, and the organic tail having at least one carbon-carbon double bond coordinates/associates with the different polymer species in the resin composition. Thus, the compatibilizer serves to crosslink or graft the different polymer types, with the organic linker acting as coupling modifier, wherein the coupling involves a physical (e.g., steric) and/or chemical (e.g., chemical bonding, such as covalent or van der Waals) interaction between the different polymers and between the polymers and the particulate. The overall effect is to enhance the compatibility of the different polymer types in the polymer resin which, in turn, may enhance processing of the polymer resin and/or one or more physical properties (e.g., one or more mechanical properties) of an article of manufacture, such as a portable waste or refuse container, for example, a wheelie bin, made from the polymer resin. The surface of the particulate may serve to balance the anionic charge of the organic linker. Further, the compatibilizing effect may enable greater quantities of particulate to be incorporated without adversely affecting the processability of the polymer blend and/or the physical properties of the articles made from the polymer blend. This, in turn, may reduce costs because less polymer (recycled or otherwise) is used.

In certain embodiments, the organic linker is the conjugate base of an organic acid, for example, a carboxylate or phosphate or phosphite or phosphinate or amino acid. In certain embodiments, the organic linker is a carboxylate. In alternate embodiments, the organic linker includes a maleimide ring (e.g., with an amide carboxylate functionality coordinates/associates with the surface of the particulate and a carbon-carbon double bond coordinates/associates with the different polymer species in the polymer resin).

In certain embodiments, the organic linker comprises at least one carbon atom in addition to the carbon-carbon double bond. In certain embodiments, the organic linker comprises at least two carbon atoms, or at least three carbon atoms, or at least four carbon atoms, or at least five carbon atoms in addition to the carbon-carbon double bond. In certain embodiments, the organic linker comprises at least six carbon atoms, for example, a chain of at least six carbon atoms, including the at least one carbon-carbon double bond. In certain embodiments, the organic linker comprises only one carbon-carbon double bond. In certain embodiments, the organic linker comprises two carbon-carbon double bonds. In certain embodiments, the organic linker comprises three carbon-carbon double bonds. The moieties about the at least one carbon-carbon double bond may be arranged in a *cis* or *trans* configuration. The carbon-carbon double bond may be a terminal group or may be internal to the molecule, i.e., within the chain of carbon atoms.

In certain embodiments, the organic linker is:

(1) $CH_2=CH-(CH_2)_a-Z$

and/or

(2) $CH_3-(CH_2)_b-CH=CH-(CH_2)_c-Z$

wherein a is equal to or greater than 3;
wherein b is equal to or greater than 1, and c is equal to or greater than 0, provided that b + c is at least 2; and
wherein Z is a carboxylate group, a phosphate group, a phosphite or a phosphinate group.

In certain embodiments, a is from 6 to 20, for example, from 6 to 18, or 6 to 16, or 6 to 14, or 6 to 12, or 6 to 10, or 7 to 9. In certain embodiments, a is 8.

In certain embodiments, b and c are each independently from 4 to 10, for example, each independently from 5 to 11, or from 5 to 10, or from 6 to 9, or from 6 to 8. In certain embodiments, b and c are both 7.

In certain embodiments, when the organic linker is of formula (1), Z is a carboxylate group. In such embodiments, the compatibilizer may consist essentially of, or consist of, particulate (e.g., mineral particulate) and the organic linker of formula (1) and wherein Z is a carboxylate group.

In certain embodiments, when the organic linker is of formula (2), Z is a carboxylate group. In such embodiments, the compatibilizer may consist essentially of, or consist of, particulate (e.g., mineral particulate) and the organic linker of formula (2) and wherein Z is a carboxylate group.

In certain embodiments, the organic linker is a mixture of formula (1) and formula (2), optionally wherein Z is, in each case, a carboxylate group. In such embodiments, the compatibilizer may consist essentially of, or consist of, particulate (e.g., mineral particulate) the organic linker of formula (1) and wherein Z is a carboxylate group, and the organic linker of formula (2) and wherein Z is a carboxylate group.

In certain embodiments, the organic acid is an unsaturated fatty acid or derived from an unsaturated fatty acid. In certain embodiments, when the organic acid is an unsaturated fatty acid, the compatibilizer consists essentially of, or consists of, particulate (for example, mineral particulate) and organic linker. In such embodiments, the unsaturated fatty acid may be selected from one of myristoleic acid, palmitoleic acid, sapienic acid, oleic acid, elaidic acid, vaccenic acid, linoleic acid, linoelaidic acid, $\alpha$-linolenic acid, arachidonic acid, eicosapentaenoic acid, erucuc acid and docosahexanoic acid. In such embodiments, the unsaturated fatty acid may be oleic acid, i.e., in certain embodiments, the compatibilizer comprises particulate (for example, mineral particulate) and the basic form of oleic acid. In certain embodiments, the compatibilizer consists of particulate (for example, mineral particulate) and the basic form of oleic acid.

In certain embodiments, the organic acid is derived from an unsaturated fatty acid. In certain embodiments, the organic acid is undecylenic acid, i.e., the organic linker is the basic form of undecylenic acid. In certain embodiments, the compatibilizer consists of particulate (for example, mineral particulate) and the basic form of undecylenic acid.

*The inorganic particulate material*

The inorganic particulate material may, for example, be an alkaline earth metal carbonate or sulphate, such as calcium carbonate, magnesium carbonate, dolomite, gypsum, a hydrous kandite clay such as kaolin, halloysite or ball clay, an anhydrous (calcined) kandite clay such as metakaolin or fully calcined kaolin, talc, mica, perlite or diatomaceous earth, or magnesium hydroxide, or aluminium trihydrate, or combinations thereof.

A preferred inorganic particulate material is calcium carbonate. Hereafter, the invention may tend to be discussed in terms of calcium carbonate, and in relation to aspects where the calcium carbonate is processed and/or treated. The invention should not be construed as being limited to such embodiments.

The particulate calcium carbonate used in the present invention may be obtained from a natural source by grinding. Ground calcium carbonate (GCC) is typically obtained by crushing and then grinding a mineral source such as chalk, marble or limestone, which may be followed by a particle size classification step, in order to obtain a product having the desired degree of fineness. Other techniques such as bleaching, flotation and magnetic separation may also be used to obtain a product having the desired degree of fineness and/or colour. The particulate solid material may be ground autogenously, i.e. by attrition between the particles of the solid material themselves, or, alternatively, in the presence of a particulate grinding medium comprising particles of a different material from the calcium carbonate to be ground. These processes may be carried out with or without the presence of a dispersant and biocides, which may be added at any stage of the process.

Precipitated calcium carbonate (PCC) may be used as the source of particulate calcium carbonate in the present invention, and may be produced by any of the known methods available in the art. TAPPI Monograph Series No 30, "Paper Coating Pigments", pages 34-35 describes the three main commercial processes for preparing precipitated calcium carbonate which is suitable for use in preparing products for use in the paper industry, but may also be used in the practice of the present invention. In all three processes, a calcium carbonate feed material, such as limestone, is first calcined to produce quicklime, and the quicklime is then slaked in water to yield calcium hydroxide or milk of lime. In the first process, the milk of lime is directly carbonated with carbon dioxide gas. This process has the advantage that no by-product is formed, and it is relatively easy to control the properties and purity of the calcium carbonate product. In the second process the milk of lime is contacted with soda ash to produce, by double decomposition, a precipitate of calcium carbonate and a solution of sodium hydroxide. The sodium hydroxide may be substantially completely separated from the calcium carbonate if this process is used commercially. In the third main commercial process the milk of lime is first contacted with ammonium chloride to give a calcium chloride solution and ammonia gas. The calcium chloride solution is then contacted with soda ash to produce by double decomposition precipitated calcium carbonate and a solution of sodium chloride. The crystals can be produced in a variety of different shapes and sizes, depending on the specific reaction process that is used. The three main forms of PCC crystals are aragonite, rhombohedral and scalenohedral, all of which are suitable for use in the present invention, including mixtures thereof.

Wet grinding of calcium carbonate involves the formation of an aqueous suspension of the calcium carbonate which may then be ground, optionally in the presence of a suitable dispersing agent. Reference may be made to, for

example, EP-A-614948 for more information regarding the wet grinding of calcium carbonate. The inorganic particulate, e.g., calcium carbonate, may also be prepared by any suitable dry grinding technique.

In some circumstances, additions of other minerals may be included, for example, one or more of kaolin, calcined kaolin, wollastonite, bauxite, talc, titanium dioxide or mica, could also be present.

When the inorganic particulate material is obtained from naturally occurring sources, it may be that some mineral impurities will contaminate the ground material. For example, naturally occurring calcium carbonate can be present in association with other minerals. Thus, in some embodiments, the inorganic particulate material includes an amount of impurities. In general, however, the inorganic particulate material used in the invention will contain less than about 5% by weight, preferably less than about 1% by weight, of other mineral impurities.

Unless otherwise stated, particle size properties referred to herein for the inorganic particulate materials are as measured by the well known conventional method employed in the art of laser light scattering, using a CILAS 1064 instrument (or by other methods which give essentially the same result). In the laser light scattering technique, the size of particles in powders, suspensions and emulsions may be measured using the diffraction of a laser beam, based on an application of Mie theory. Such a machine provides measurements and a plot of the cumulative percentage by volume of particles having a size, referred to in the art as the 'equivalent spherical diameter' (e.s.d), less than given e.s.d values. The mean particle size $d_{50}$ is the value determined in this way of the particle e.s.d at which there are 50% by volume of the particles which have an equivalent spherical diameter less than that $d_{50}$ value. The term $d_{90}$ is the particle size value less than which there are 90% by volume of the particles.

The $d_{50}$ of the inorganic particulate may be less than about 100 μm, for example, less than about 80 μm for example, less than about 60 μm for example, less than about 40 μm, for example, less than about 20 μm, for example, less than about 15 μm, for example, less than about 10 μm, for example, less than about 8 μm, for example, less than about 6 μm, for example, less than about 5 μm, for example, less than about 4, for example, less than about 3 μm, for example less than about 2 μm, for example, less than about 1.5 μm or, for example, less than about 1 μm. The $d_{50}$ of the inorganic particulate may be no greater than about 2.5 μm, for example, no greater than about 1.0 μm or no greater than about 0.75 μm. The $d_{50}$ of the inorganic particulate may be greater than about 0.5 μm, for example, greater than about 0.75 μm greater than about 1 μm, for example, greater than about 1.25 μm or, for example, greater than about 1.5 μm. The $d_{50}$ of the inorganic particulate may be in the range of from 0.5 to 20 μm, for example, from about 0.5 to 10 μm, for example, from about 1 to about 5 μm, for example, from about 1 to about 3 μm, for example, from about 1 to about 2 μm, for example, from about 0.5 to about 2 μm or, for example, from about 0.5 to 1.5 μm, for example, from about 0.5 to about 1.4 μm, for example, from about 0.5 to about 1.4 μm, for example, from about 0.5 to about 1.3 μm, for example, from about 0.5 to about 1.2 μm, for example, from about 0.5 to about 1.1 μm, for example, from about 0.5 to about 1.0 μm, for example, from about 0.6 to about 1.0 μm, for example, from about 0.7 to about 1.0 μm, for example about 0.6 to about 0.9 μm, for example, from about 0.7 to about 0.9 μm.

The $d_{90}$ (also referred to as the top cut) of the inorganic particulate may be less than about 150 μm, for example, less than about 125 μm for example, less than about 100 μm for example, less than about 75 μm, for example, less than about 50 μm, for example, less than about 25 μm, for example, less than about 20 μm, for example, less than about 15 μm, for example, less than about 10 μm, for example, less than about 8 μm, for example, less than about 6 μm, for example, less than about 4 μm, for example, less than about 3 μm or, for example, less than about 2 μm. Advantageously, the $d_{90}$ may be less than about 25 μm.

The amount of particles smaller than 0.1 μm is typically no more than about 5% by volume.

The inorganic particulate may have a particle steepness equal to or greater than about 10. Particle steepness (i.e., the steepness of the particle size distribution of the inorganic particulate) is determined by the following formula:

$$\text{Steepness} = 100 \times (d_{30}/d_{70}),$$

wherein $d_{30}$ is the value of the particle e.s.d at which there are 30% by volume of the particles which have an e.s.d less than that $d_{30}$ value and $d_{70}$ is the value of the particle e.s.d. at which there are 70% by volume of the particles which have an e.s.d. less than that $d_{70}$ value.

The inorganic particulate may have a particle steepness equal to or less than about 100. The inorganic particulate may have a particle steepness equal to or less than about 75, or equal to or less than about 50, or equal to or less than about 40, or equal to or less than about 30. The inorganic particulate may have a particle steepness from about 10 to about 50, or from about 10 to about 40.

The inorganic particulate is treated with a surface treatment agent, i.e., a coupling modifier, such that the inorganic particulate has a surface treatment on its surface. In certain embodiments, the inorganic particulate is coated with the surface treatment agent.

In certain embodiments, the inorganic particulate material of the compatibilizer is calcium carbonate, for example, GCC.

According to certain aspects and embodiments thereof, the polymer resin is substantially free of, i.e., does not comprise, a peroxide-containing additive, for example, di-cumyl peroxide or 1,1-Di(tert-butylperoxy)-3,3,5-trimethylcyclohexane .

Alternatively, in certain aspects and embodiments thereof, the polymer resin comprises a peroxide-containing additive, for example, di-cumyl peroxide or 1,1-Di(tert-butylperoxy)-3,3,5-trimethylcyclohexane. The peroxide-containing additive may not necessarily be included with the surface treatment agent/coupling modifier and instead may be added during the compounding of the compatibilizer and the polymer, as described below. In some polymer systems, e.g., those containing polyethylene (e.g., HDPE), the inclusion of a peroxide-containing additive may promote cross-linking of the polymer chains. In other polymer systems, e.g., polypropylene, the inclusion of a peroxide-containing additive may promote polymer chain scission. The peroxide-containing additive may be present in an amount effective to achieve the desired result. This will vary between coupling modifiers and may depend upon the precise composition of the inorganic particulate and the polymer. For example, the peroxide-containing additive may be present in an amount equal to or less than about 1 wt. % based on the weight of the polymer in the polymer resin to which the peroxide-containing additive is to be added, for example, equal to or less than about 0.5 wt. %, for example, 0.1 wt %, for example equal to or less than about 0.09 wt. %, or for example equal to or less than about 0.08 wt. % or for example, equal to or less than about 0.06 wt. %, equal to or less than about 0.05 wt. %, equal to or less than about 0.04 wt. %, equal to or less than about 0.03 wt. %, equal to or less than about 0.02 wt. %, or equal to or less than about 0.01 wt. %,. Typically, the peroxide-containing additive, if present, is present in an amount greater than about 0.001 wt. % based on the weight of the polymer in the polymer resin, for example, equal to or greater than about 0.005 wt. %, or equal to or greater than about 0.075 wt. %, or equal to or greater than about 0.01 wt. %.

The compatibilizer may be prepared by combining the inorganic particulate, surface treatment agent/coupling modifier and optional peroxide-containing additive and mixing using conventional methods, for example, using a Steele and Cowlishaw high intensity mixer, preferably at a temperature equal to or less than 80 °C. The compound(s) of the surface treatment agent/coupling modifier may be applied after grinding the inorganic particulate, but before the inorganic particulate is added to the optionally recycled polymer composition. For example, the surface treatment agent/coupling modifier may be added to the inorganic particulate in a step in which the inorganic particulate is mechanically de-aggregated. The surface treatment agent/coupling modifier may be applied during de-aggregation carried out in a milling machine.

The compatibilizer may additionally comprise an antioxidant. Suitable antioxidants include, but are not limited to, organic molecules consisting of hindered phenol and amine derivatives, organic molecules consisting of phosphates and lower molecular weight hindered phenols, and thioesters. Exemplary antioxidants include Irganox 1010 and Irganox 215, and blends of Irganox 1010 and Irganox 215. Alternatively, such antioxidants may be added to the resin composition separately from the compatibilizer. Alternatively, a portion of the total required amount of antioxidant may be present in both the compatibilizer and added separately from the compatibilizer to the resin composition.

*Secondary filler*

In certain embodiments, the resin composition comprises filler in addition to the compatibilizer when present, i.e., one or more secondary filler components. The secondary filler component may not be treated with a surface treatment agent/coupling modifier. In certain embodiments, the secondary filler component is not treated with a surface treatment agent/coupling modifier. Such additional components, where present, are suitably selected from known filler components for polymer compositions. For example, the inorganic particulate used in the functional filler may be used in conjunction with one more other known secondary filler components, such as for example, carbon black and/or talc.

In certain embodiments, the resin composition comprises carbon black as a secondary filler component. The carbon black may function as colorant and/or UV stabiliser.

In certain embodiments, the weight ratio of compatibilizer to secondary filler component is from about 1:1 to about 20:1, for example, from about 5:1 to about 15:1, or from about 7.5:1 to about 12.5:1, for example, about 10:1. In certain embodiments, the inorganic particulate of the functional filler is calcium carbonate, for example, ground calcium carbonate, and the secondary filler component is uncoated carbon black. When a secondary filler component is used, it may be present in an amount of from about 0.1 % to about 5 % by weight of the polymer composition, for example, from about 0.5 % to about 4 % by weight, or from about 0.5 % to about 3 % by weight, or from about 0.5 % to about 2.5 % by weight, or from about 0.5 % to about 2 % by weight, or from about 0.5 % to about 1.5 % by weight, or from about 0.75 % to about 1.25 % by weight of the resin composition.

The secondary filler component(s) may also serve to increase the density of the resin composition.

In certain embodiments, the secondary filler is present in an amount of at least about 0.5 % by weight, based on the total weight of the resin composition, for example, from about 0.5 % by weight to about 10 % by weight, or from about 0.5 % by weight to about 5.0 % by weight, or from about 0.5 % by weight to about 2.5 % by weight.

*Impact modifier*

In certain embodiments, the polymer resin comprises an impact modifier, for example, up to about 20 % by weight of an impact modifier, based on the total weight of the polymer resin, for example, from about 0.1 % by weight to about 20 % by weight, or from about 0.5 % by weight to about 15 % by weight, or, for example, for example, in an amount of less than about 10 % by weight, or from about 1 % by weight to about 10 % by weight, or from about 2 % by weight to about 5 % by weight, or from about 1 % by weight to about 10 % by weight, or from about 1 % by weight to about 7.5 % by weight, or from about 1.5 wt.% to about 3.0 wt.%, or from about 2 % by weight to about 6 % by weight, or from about 2 % by weight to about 5 % by weight of an impact modifier, based on the total weight of polymer resin.
In certain embodiments, the impact modifier is an elastomer, for example, a polyolefin elastomer. In certain embodiments, the polyolefin elastomer is a copolymer of ethylene and another olefin (e.g., an alpha-olefin), for example, octane, and/or butene and/or styrene. In certain embodiments, the impact modifier is a copolymer of ethylene and octene. In certain embodiments, the impact modifier is a copolymer of ethylene and butene.
In certain embodiments, the impact modifier is a recycled (e.g., post industrial) impact modifier.
In certain embodiments, the impact modifier, for example, polyolefin copolymer as described above, such as an ethylene-octene copolymer, has a density of from about 0.80 to about 0.95 g/cm$^3$ and/or a MFI of from about 0.2 g/10 min (2.16 kg@190 °C) to about 30 g/10 min (2.16 kg@190 °C), for example, from about 0.5 g/10 min (2.16 kg@190 °C) to about 20 g/10 min (2.16 kg@190 °C), or from about 0.5 g/10 min (2.16 kg@190 °C) to about 15 g/10 min (2.16 kg@190 °C), or from about 0.5 g/10 min (2.16 kg@190 °C) to about 10 g/10 min (2.16 kg@190 °C), or from about 0.5 g/10 min (2.16 kg@190 °C) to about 7.5 g/10 min (2.16 kg@190 °C), or from about 0.5 g/10 min (2.16 kg@190 °C) to about 5 g/10 min (2.16 kg@190 °C), or from about 0.5 g/10 min (2.16 kg@190 °C) to about 4 g/10 min (2.16 kg@190 °C), or from about 0.5 g/10 min (2.16 kg@190 °C) to about 3 g/10 min (2.16 kg@190 °C), or from about 0.5 g/10 min (2.16 kg@190 °C) to about 2.5 g/10 min (2.16 kg@190 °C), or from about 0.5 g/10 min (2.16 kg@190 °C) to about 2 g/10 min (2.16 kg@190 °C), or from about 0.5 g/10 min (2.16 kg@190 °C) to about 1.5 g/10 min (2.16 kg@190 °C). In such or certain embodiments, the impact modifier is an ethylene-octene copolymer having a density of from about 0.85 to about 0.86 g/cm$^3$. Exemplary impact modifiers are polyolefin elastomers made by DOW under the Engage(RTM) brand, for example, Engage (RTM) 8842. In such embodiments, the compounded polymer blend may additionally comprise an antioxidant, as described herein. In such embodiments, the impact modifier may be present in an amount of less than about 10 wt.%, for example, from about 1 wt. % to about 7.5 wt. %., or from about 1.5 wt. % to about 3.0 wt. %.
In certain embodiments, the impact modifier is a copolymer based on styrene and butadiene, for example, a linear block copolymer based on styrene and butadiene. In such embodiments, the impact modifier may have a MFI of from about from about 1 to about 5 g/10min (200°C @ 5.0kg), for example, from about 2 g/10min (200°C @ 5.0kg) to about 4 g/10min (200°C @ 5.0kg), or from about 3 g/10min (200°C @ 5.0kg) to about 4 g/10min (200°C @ 5.0kg). In such embodiments, the linear block copolymer may be a recycled linear block copolymer.
In certain embodiments, the impact modifier is a copolymer based on styrene and isoprene, for example, a linear block copolymer based on styrene and isoprene. In such embodiments, the impact modifier may have a MFI of from about from about 5 to about 20 g/10min (230°C @ 2.16), for example, from about 8 g/10min (230°C @ 2.16kg) to about 15 g/10min (230°C @ 2.16kg), or from about 10 g/10min (230°C @ 2.16kg) to about 15 g/10min (230°C @ 2.16kg). In such embodiments, the linear block copolymer may be recycled.
In certain embodiments, the impact modifier is a triblock copolymer based on styrene and ethylene/butene. In such embodiments, the impact modifier may have a MFI of from about 15 g/10min (200°C @ 5.0kg) to about 25 g/10min (200°C @ 5.0kg), for example, from about 20 g/10min (200°C @ 5.0kg) to about 25 g/10min (200°C @ 5.0kg).
MFI may be determined in accordance with ISO 1133.
In certain embodiments, there is crosslinking between the impact modifier and one or more polymers of the polymer resin, for example, in embodiments in which the impact modifier is a linear block copolymer based on styrene and butadiene, or on styrene and isoprene, and/or the resin composition comprises PE. In some embodiments, the impact modifier may be miscible in the polymer blend.
In certain embodiments, the impact modifier is an optionally recycled styrenebutadiene-styrene block copolymer (rSBS). In such embodiments, the rSBS may be present in the resin composition in an amount of from about 2 % to about 5 % by weight, based on the total weight of resin composition.

*Methods of manufacture*

The resin composition may be made by a method comprising compounding the polymer components, for example, polyethylene, and propylene, with the compatibilizer and other optional additives.
In certain embodiments, the method comprises providing a recycled mixed polyolefin feed comprising polypropylene and polyethylene, optionally combining the recycled mixed polyolefin feed with other sources of polyethylene and/or polypropylene, and compounding.

The relative amounts of polyethylene, polypropylene and any other polyolefin source may be selected to produce a resin composition as described herein.

In certain embodiments, the method comprises preparing, providing or obtaining the compatibilizer, and compounding with the mixture of different polymer types. The compatibilizer may be prepared by mixing the inorganic particulate material with the surface treatment agent/coupling in suitable amounts, as described herein, and at a temperature of no more than about 80 °C.

In certain embodiments, the resin composition comprises a secondary filler component and/or impact modifier (e.g., rSBS) and/or antioxidant, which may be added prior to or during compounding of the resin composition and compatibilizer.

Compounding per se is a technique which is well known to persons skilled in the art of polymer processing and manufacture. It is understood in the art that compounding is distinct from blending or mixing processes conducted at temperatures below that at which the constituents become molten.

Compounding may be carried out using a twin screw compounder, for example, a Baker Perkins 25 mm twin screw compounder. The polymers and compatibilizer and other optional additives may be premixed and fed from a single hopper. Alternatively, at least the polymers and compatibilizer may be fed from separate hoppers. The resulting melt may be cooled, for example, in a water bath, and then pelletized. In certain embodiments, the temperature during compounding is elevated relative to the temperature at which the compatibilizer is prepared. In certain embodiments, the temperature during compound ranges from about 150-250 °C, for example, from about 160-240 °C, or from about 170-230 °C, or from about 170-220 °C, or from about 170-220 °C, or from about 200-250 °C. In certain embodiments, the temperature during compounding is sufficient to cause thermo-mechanical degradation of the polyolefins (e.g., recycled polyolefins) and to generate sufficient macro-radical fragments to react with the surface treated inorganic particulate material.

The compounded compositions may further comprise additional components, such as slip aids (for example Erucamide), process aids (for example Polybatch® AMF-705), mould release agents and antioxidants. Suitable mould release agents will be readily apparent to one of ordinary skill in the art, and include fatty acids, and zinc, calcium, magnesium and lithium salts of fatty acids and organic phosphate esters. Specific examples are stearic acid, zinc stearate, calcium stearate, magnesium stearate, lithium stearate, calcium oleate and zinc palmitate. Slip and process aids, and mould release agents may be added in an amount less than about 5 wt. % based on the weight of the masterbatch.

*Other embodiments*

In certain embodiments, the resin composition does not comprise 24 % by weight polypropylene.

In certain embodiments, the resin composition does not comprise 56 % by weight HDPE.

In certain embodiments, the resin composition does not comprise 24 % by weight polypropylene and 56 % by weight polypropylene.

In certain embodiments, the resin composition does not comprise 20 % by weight surface treated calcium carbonate, optionally wherein: the calcium carbonate is a ground calcium carbonate having a $d_{50}$ of 0.8 $\mu$m, and/or the amount of surface treatment according to formula (1) applied to the calcium carbonate is calculated to give a monolayer coverage on the surface.

In certain embodiments, the resin composition is not a polymer composition designated as Composition A. Composition A is a polymer composition comprising 20 % by weight surface treated calcium carbonate, 56 % HDPE and 24 % polypropylene, wherein:

(i) the surface treated calcium carbonate is a ground calcium carbonate (dso = 0.8 $\mu$m) coated with a coupling modifier according to formula (1), wherein the amount of surface treatment applied to the calcium carbonate is calculated to give monolayer coverage on the surface
(ii) the composition is prepared using a Baker Perkins 25 mm twin screw compounder, and
(iii) the HDPE and PP are from a recycled mixed polyolefin feed comprising HDPE and PP, which is derived from injection moulded materials.

In certain embodiments, the polymeric resin is not in the form of a polymeric fibre.

In certain embodiments, the article is not a polymeric fibre.

*Articles of manufacture*

The polymer resin of the invention, as defined herein, may be used to manufacture an article by injection moulding of said polymer resin. In certain embodiments, the present invention is directed to methods of manufacturing

an article by injection moulding, the method comprising injection moulding an article from the polymer resin of the present invention, as defined herein.

Any known method of injection moulding that is suitable for preparing an article in accordance with the invention may be used. In certain embodiments, an Arburg Allrounder 320M is used to prepare the injection moulded article, and the mouldings may subsequently be conditioned for a minimum of 40hrs at 23°C at a relative humidity of 50%.

In certain embodiments, the article is a portable waste or refuse container, for example, a wheelie bin, or a part of a component thereof.

In certain embodiments, the article of manufacture is a plastic pallet.

In certain embodiments, the article manufactured by injection moulding of the polymer resin as defined herein, has different and/or improved mechanical properties compared to (i) an article comprising the polymer resin absent the compatibilizer and/or (ii) an article made from the polymer resin in which the compatibilizer has been replaced by a polymer-based compatibilizer.

In certain embodiments, the article manufactured by injection moulding of the polymer resin as defined herein, has one or more of the following:

a) reduced tiger stripes, compared to (i) an article comprising the polymer resin absent the compatibilizer and/or (ii) an article made from the polymer resin in which the compatibilizer has been replaced by a polymer-based compatibilizer, or is free of tiger stripes;

b) a flexural modulus which is greater than an article made from the polymer resin in which the compatibilizer has been replaced by a polymer-based compatibilizer, as determined in accordance with ISO 178;

c) a flexural modulus of at least about 900 MPa, for example, from about 900 MPa to about 1200 MPa, as determined in accordance with ISO 178;

d) an impact strength which is greater than an article comprising the polymer resin absent the compatibilizer, as determined in a Izod notched impact test at 23°C ± 2 °C in accordance with ISO 180;

e) an impact strength which is greater than (i) an article comprising the polymer resin absent the compatibilizer, as determined in a Izod notched impact test at 23 °C ± 2 °C in accordance with ISO 180 and/or a flexural modulus which is greater than (ii) an article made from the polymer resin in which the compatibilizer has been replaced by a polymer-based compatibilizer, as determined in accordance with ISO 178;

f) an impact strength of at least about 4.0 $kJ/m^2$, for example, from about 4.0 $kJ/m^2$ to about 20 $kJ/m^2$, as determined in a Izod notched impact test at 23 °C ± 2 °C in accordance with ISO 180.

In certain embodiments, the article manufactured by injection moulding of the polymer resin as defined herein, has reduced tiger stripes, compared to (i) an article comprising the polymer resin absent the compatibilizer and/or (ii) an article made from the polymer resin in which the compatibilizer has been replaced by a polymer-based compatibilizer, or is free of tiger stripes.

Injection-moulded plastics, often when involving long flow lengths, can exhibit visible defects called tiger stripes. Thus, the term "tiger stripes" means defects which are present in the form of bands that are visible on the surface of an injection moulded article. The stripes are typically alternating bands, for example, light and dark bands or glossy and dull bands, that are present on a surface of the injection moulded article, due to unstable flow front and for example because of insufficient joining of immiscible polymer resins.

In certain embodiments, the compatibilizer, as defined herein, can be used in the manufacture of an article by injection moulding the polymer resin, as defined herein, to eliminate tiger stripes, or to reduce tiger stripes, compared to (i) an article comprising the polymer resin absent the compatibilizer and/or (ii) an article made from the polymer resin in which the compatibilizer has been replaced by a polymer-based compatibilizer.

In certain embodiments, the compatibilizer, as defined herein, can be used in the polymer resin, as defined herein, to (i) eliminate the occurrence of tiger stripes in an article manufactured from the polymer resin by injection moulding, or (ii) reduce the occurrence of tiger stripes compared to an article manufactured from the polymer resin absent the compatibilizer and/or an article made from the polymer resin in which the compatibilizer has been replaced by a polymer-based compatibilizer.

In certain embodiments, use of the polymer resin, as defined herein, in the manufacture of an article by injection moulding of the polymer resin, can reduce the visible presence of tiger stripes by at least 50 %, or by at least 75 %, or by at least 90 %, or by at least 99%. In certain embodiments, use of the polymer resin, as defined herein, in the manufacture of an article by injection moulding of the polymer resin can eliminate the visible presence of tiger stripes in the manufactured article.

In certain embodiments, the article manufactured as defined herein may have improved tiger stripe properties, for example, improved visual tiger stripe properties compared to (i) an article manufactured from the polymer resin absent the compatibilizer and/or (ii) an article made from the polymer resin in which the compatibilizer has been replaced by a polymer-based compatibilizer. In certain embodiments, article manufactured as defined herein may have visibly reduced

tiger striping, for example, a reduced number of tiger stripes or tiger stripes that are less visible, compared to (i) an article manufactured from the polymer resin absent the compatibilizer or (ii) an article made from the polymer resin in which the compatibilizer has been replaced by a polymer-based compatibilizer.

The effect of the compatibilizer in the polymer resin upon the presence of tiger stripes can visibly be seen in Figures 1 and 2.

In certain embodiments, the article manufactured by injection moulding of the polymer resin as defined herein, has a flexural modulus which is greater than an article made from the polymer resin in which the compatibilizer has been replaced by a polymer-based compatibilizer, as determined in accordance with ISO 178.

In certain embodiments, the article manufactured by injection moulding of the polymer resin as defined herein, has a flexural modulus of at least about 880 MPa, for example, of at least about 900 MPa, or of at least about 925 MPa, or of at least about 950 MPa. In certain embodiments, the article manufactured by injection moulding of the polymer resin as defined herein, has a flexural modulus from about 900 to about 1200 MPa, for example, from about 925 to about 1175 MPa.

In certain embodiments, the article manufactured by injection moulding of the polymer resin as defined herein, has a flexural modulus that is at least about 2% greater, for example at least about 5% greater, or at least about 10% greater, compared to an article made from the polymer resin in which the compatibilizer has been replaced by a polymer-based compatibilizer. In certain embodiments, the article manufactured by injection moulding of the polymer resin as defined herein, has a flexural modulus that is at least about 50 MPa greater, for example, at least about 75 MPa greater, or at least about 85 MPa greater, compared to an article made from the polymer resin in which the compatibilizer has been replaced by a polymer-based compatibilizer.

In certain embodiments, the article manufactured by injection moulding of the polymer resin as defined herein, has a flexural modulus that is comparable to an article comprising the polymer resin absent the compatibilizer, for example, the flexural modulus may be no more than 10% lower than an article comprising the polymer resin absent the compatibilizer. In certain embodiments, the article manufactured by injection moulding of the polymer resin as defined herein, has a greater flexural modulus compared to an article comprising the polymer resin absent the compatibilizer.

In certain embodiments, the article manufactured by injection moulding of the polymer resin as defined herein, has a flexural modulus which is comparable to, or greater than, (i) an article comprising the polymer resin absent the compatibilizer, as determined in accordance in a Izod notched impact test at 23 °C ± 2 °C in accordance with ISO 180 and/or a flexural modulus which is greater than (ii) an article made from the polymer resin in which the compatibilizer has been replaced by a polymer-based compatibilizer, as determined in accordance with ISO 178.

In certain embodiments, the article manufactured by injection moulding of the polymer resin as defined herein, has an impact strength which is greater than an article comprising the polymer resin absent the compatibilizer, as determined in a Izod notched impact test at 23 °C ± 2 °C in accordance with ISO 180.

In certain embodiments, the article manufactured by injection moulding of the polymer resin as defined herein, has an impact strength which is at least 0.1 $kJ/m^2$ greater, for example, at least 0.2 $kJ/m^2$ greater, or at least 0.5 $kJ/m^2$ greater, or at least 1 $kJ/m^2$ greater, or at least 1.3 $kJ/m^2$ greater, compared to an article comprising the polymer resin absent the compatibilizer.

In certain embodiments, the article manufactured by injection moulding of the polymer resin as defined herein, has an impact strength which is at least 1% greater, for example, at least 3% greater, or at least 5% greater, or at least 10% greater, or at least 25% greater, compared to an article comprising the polymer resin absent the compatibilizer.

In certain embodiments, the article manufactured by injection moulding of the polymer resin as defined herein, has an impact strength of at least about 4.0 $kJ/m^2$, for example, at least about 4.2 $kJ/m^2$, for example, at least about 5.0 $kJ/m^2$, or at least about 6.0 $kJ/m^2$, for example, from about 4.2 $kJ/m^2$ to about 20 $kJ/m^2$, for example, about 4.2 $kJ/m^2$ to about 10 $kJ/m^2$, or about 4.2 $kJ/m^2$ to about 7.0 $kJ/m^2$, or from about 5.0 $kJ/m^2$ to 7.0 $kJ/m^2$, or from about 6.0 $kJ/m^2$ to about 7.0 $kJ/m^2$.

In certain embodiments, the article manufactured by injection moulding of the polymer resin as defined herein, has an impact strength which is comparable to an article made from the polymer resin in which the compatibilizer has been replaced by a polymer-based compatibilizer. In certain embodiments, the article manufactured by injection moulding of the polymer resin as defined herein, has an impact strength which is no more than about 50% lower, for example, no more than about 40% lower, or no more than about 30% lower, compared to an article made from the polymer resin in which the compatibilizer has been replaced by a polymer-based compatibilizer.

In certain embodiments, the article manufactured by injection moulding of the polymer resin as defined herein, has an impact strength which is greater than (i) an article comprising the polymer resin absent the compatibilizer, and/or has an impact strength which is comparable to (ii) an article made from the polymer resin in which the compatibilizer has been replaced by a polymer-based compatibilizer.

In certain embodiments, the article manufactured by injection moulding of the polymer resin as defined herein, has an impact strength which is greater than (i) an article comprising the polymer resin absent the compatibilizer, as determined in accordance in a Izod notched impact test at 23 °C ± 2 °C in accordance with ISO 180 and/or a flexural

modulus which is greater than (ii) an article made from the polymer resin in which the compatibilizer has been replaced by a polymer-based compatibilizer, as determined in accordance with ISO 178.

In certain embodiments, the article manufactured by injection moulding of the polymer resin as defined herein, has an impact strength of at least about 4.0 kJ/$m^2$ and a flexural modulus of at least about 900 MPa, for example, an impact strength of at least about 4.3 kJ/$m^2$ and a flexural modulus of at least about 950 MPa.

In certain embodiments, the article manufactured by injection moulding of the polymer resin as defined herein, has an impact strength of from about 4 kJ/$m^2$ to about 7 kJ/$m^2$ and a flexural modulus of from about 900 MPa to about 1200 MPa, for example, an impact strength of from about 4.3 kJ/$m^2$ to about 6.5 kJ/$m^2$ and a flexural modulus of from about 950 MPa to about 1175 MPa.

In certain embodiments, the article manufactured by injection moulding of the polymer resin as defined herein, has an impact strength which is at least 0.1 kJ/$m^2$ greater, for example at least 0.2 kJ/$m^2$ greater, than (i) an article comprising the polymer resin absent the compatibilizer and/or a flexural modulus which is at least 50 MPa greater, for example at least 80 MPa greater, than (ii) an article made from the polymer resin in which the compatibilizer has been replaced by a polymer-based compatibilizer.

In certain embodiments, the article manufactured by injection moulding of the polymer resin as defined herein, has an impact strength which is greater than, for example, at least 0.1 kJ/$m^2$ greater, or at least 0.2 kJ/$m^2$ greater, than an article comprising the polymer resin absent the compatibilizer and/or a flexural modulus which is comparable to, for example, no more than 10% lower than, or is greater than, an article comprising the polymer resin absent the compatibilizer.

In certain embodiments, the article manufactured by injection moulding of the polymer resin as defined herein, has an impact strength which is comparable to, for example no more than 50% less than or no more than 30% less than, an article made from the polymer resin in which the compatibilizer has been replaced by a polymer-based compatibilizer and/or a flexural modulus which is greater than an article made from the polymer resin in which the compatibilizer has been replaced by a polymer-based compatibilizer.

In certain embodiments, articles manufactured in accordance with the present invention have an improved balance of impact strength and flexural modulus properties, for example, an optimum balance of impact strength and flexural modulus properties compared to (i) an article comprising the polymer resin absent the compatibilizer and/or (ii) an article made from the polymer resin in which the compatibilizer has been replaced by a polymer-based compatibilizer.

In certain embodiments the manufactured article is a portable waste or refuse container, for example, a wheelie bin, or a part or component thereof, and said article has an improved, optionally an optimum, balance of impact strength and flexural modulus properties of the manufactured article compared to (i) an article comprising the polymer resin absent the compatibilizer and/or (ii) an article made from the polymer resin in which the compatibilizer has been replaced by a polymer-based compatibilizer.

The impact strength properties of an article correspond to the toughness of an article i.e., the greater the impact strength of an article, the greater its toughness.

The flexural modulus properties of an article correspond to the stiffness of an article i.e., the greater the flexural modulus of an article, the greater its stiffness.

An article such as a portable waste or refuse container, for example, a wheelie bin, require a balance in toughness and stiffness properties in order for optimal performance and properties.

In certain embodiments, the compatibilizer as defined herein can be used in an article, wherein the article is manufactured by injection moulding a polymer resin, as defined herein, comprising the compatibilizer to:

(A) provide a balance of toughness and stiffness which is superior compared to (i) an article which is manufactured by injection moulding the polymer resin absent the compatibilizer, or (ii) an article which is manufactured by injection moulding a polymer resin in which the compatibilizer has been replaced by a polymer-based compatibilizer, or
(B) optimize the balance between the toughness and stiffness of the article.

In certain embodiments, the compatibilizer as defined herein is used in a polymer resin, as defined herein, from which an article is manufactured by injection moulding to:

(A) provide a balance of toughness and stiffness which is superior compared to (i) an article which is manufactured by injection moulding the polymer resin absent the compatibilizer, or (ii) an article which is manufactured by injection moulding a polymer resin in which the compatibilizer has been replaced by a polymer-based compatibilizer, or
(B) optimize the balance between the toughness and stiffness of the article.

In certain embodiments, an article manufactured from the polymer resin by injection moulding has a tensile modulus and/or tensile stress at yield, as determined in accordance with ISO 527-2, which is greater than an article manufactured from a polymer resin in which the compatibilizer has been replaced by a polymer-based compatibilizer.

In certain embodiments, the polymer-based compatibilizer is a copolymer. In certain embodiments, the polymer-based compatibilizer is a polypropylene-based olefin block copolymer.

The polymer resin of the invention, as defined herein, may be used to manufacture an article by a technique other than injection moulding, for example, extrusion of said polymer resin.

## EXAMPLES

*Example 1*

Seven polymer resins were prepared as shown in Table 1 below, each comprising mixture of two types of HDPE and polypropylene (PP). All polymer resins were prepared via melt mixing with a Coperion ZSK18 twin-screw extruder (18 mm diameter). The screw speed was set to 800 rpm, and the feed rate at 8.0 kg/h. The hot extrudates were immediately quenched in water and pelletized. Samples A and 1 are comparative examples since they were prepared without the surface treated inorganic particulate material.

Table 1.

| **Sample** | **HDPE 1** [wt.-%] | **HDPE 2** [wt.-%] | **PP** [wt.-%] | **Surface treated inorganic particulate material** [wt.-%] | **Polymer based compatibilizer** | **Impact Modifier** [wt.-%] | **Antioxidant** [wt.-%] |
|---|---|---|---|---|---|---|---|
| A | 36.24 | 31.23 | 27.23 | - | 5.0 | - | 0.3 |
| 1 | 37.90 | 32.90 | 28.90 | - | - | - | 0.3 |
| 2 | 35.40 | 30.40 | 26.40 | 7.5 | - | - | 0.3 |
| 3 | 34.56 | 29.57 | 25.57 | 10.0 | - | - | 0.3 |
| 4 | 33.73 | 28.73 | 24.74 | 12.5 | - | - | 0.3 |
| 5 | 34.06 | 29.07 | 25.07 | 10.0 | - | 1.5 | 0.3 |
| 6 | 33.73 | 28.73 | 24.74 | 10.0 | - | 2.5 | 0.3 |

HDPE 1 has an MFI (g/10 min 2.16 kg @ 190 °C) of 3.3; HDPE 2 has an MFI (g/10 min 2.16 kg @ 190 °C) of 4.6; PP has an MFI (g/10 min 2.16 kg @ 190 °C) of 6.4.

*Example 2*

Melt Flow Index (MFI) properties of the seven polymer resin samples were tested. MFI is the output rate in grams that occurs in 10 minutes when a fixed pressure is applied to the melt via a piston and a load of total mass of 2.16 kg at the melt blending temperature of 190°C and 230°C. MFI was tested in accordance with ISO 1133. The MFI properties of the polymer resin samples 1-7 is provided in Table 2 below.

Table 2.

| | **A** | **1** | **2** | **3** | **4** | **5** | **6** |
|---|---|---|---|---|---|---|---|
| **MFI (g/10min) 2.16 kg @ 190 °C** | 4.0 | 4.2 | 3.9 | 3.7 | 3.7 | 3.5 | 3.8 |
| **MFI (g/10min) 5.0 kg @ 230 °C** | 6.28 | 7.2 | 7.0 | 7.0 | 7.1 | 6.9 | 7.0 |

*Example 3*

Injection moulded samples were prepared from the seven polymer resins, that were prepared in Example 1, using Arburg Allrounder 320M, and mouldings were conditioned for a minimum of 40hrs at 23°C and a relative humidity of 50% prior to the test, in accordance with Procedure A of Practice D618 (40/23/50).

Each injection moulded sample subsequently underwent the following mechanical property tests.

*Flexure testing:*

Flexure tests were carried out at room temperature using Tinius Olsen Benchtop flexure test, in accordance

with ISO 178. The flexure test results are provided in Table 3 below.

*Tensile testing:*

Tensile tests were carried out at room temperature using Tinius Olsen Benchtop tensile tester, and the results supplied correspond to an average of 8 measurements for each blend, in accordance with ISO 527-2. Table 3 below shows the tensile stress at yield (MPa) and tensile modulus (MPa) of each injection moulded sample.

*Impact testing:*

Charpy notched impact tests may be carried out at -20 ± 2°C and 23 ± 2°C using Instron Ceast 9340 falling-weight impact tester, in accordance with ISO 179. Izod notched impact tests were carried out at 23 °C ± 2 °C, in accordance with ISO 180. The results supplied in Table 3 below correspond to an average of complete break measurements for each blend.

Table 3.

| | A | 1 | 2 | 3 | 4 | 5 | 6 |
|---|---|---|---|---|---|---|---|
| **Flexural Modulus (MPa)** | 864.3 | 1012.5 | 1052.4 | 1115.7 | 1170.9 | 1032.5 | 955.9 |
| **Izod Impact Strength, Notch @ 23 °C, Complete break (kJ/m$^2$)** | 7.3 | 4.1 | - | 4.3 | - | 5.4 | 6.5 |
| **Tensile Modulus (MPa)** | 930.0 | 1070.0 | 1140.0 | 1130.0 | 1160.0 | 1040.0 | 994.0 |
| **Tensile Stress @ Yield (MPa)** | 21.9 | 24.6 | 23.4 | 23.9 | 24.0 | 23.0 | 22.5 |

## Claims

1. A method of manufacturing an article by injection moulding, the method comprising injection moulding an article from a polymer resin, wherein the polymer resin comprises different types of recycled polymer and a compatibilizer comprising inorganic particulate material and a surface treatment agent on a surface of the inorganic particulate material, and wherein the polymer resin has a MFI @ 2.16 kg/190 °C of equal to or greater than 3.0 g/10 min.

2. Method according to claim 1, wherein the polymer resin comprises polyethylene and polypropylene, or a mixture of different types of polyethylene (e.g., HDPE, LDPE and/or LLDPE) and polypropylene, or a mixture of different types of HDPE and polypropylene.

3. Method according to claim 1 or claim 2, wherein:

   the polymer resin comprises polypropylene in an amount of no more than about 90 wt.%, for example, no more than about 40 wt.%; and/or
   the polymer resin comprises polyethylene in an amount of at least about 10 wt.%, for example, at least about 60 wt.%.

4. Method according to any preceding claim, wherein the polymer resin is free of virgin polymer.

5. Method according to any preceding claim, wherein the compatibilizer is present in an amount of from about 5 wt. % to about 20 wt.%, for example, from about 8 wt. % to about 12 wt. %.

6. Method according to any preceding claim, wherein the inorganic particulate has a $d_{50}$ of no greater than about 2.5 μm, for example, no greater than about 1.0 μm or no greater than about 0.75 μm.

7. Method according to any preceding claim, wherein the surface treatment agent comprises or is a compound having a formula (1):

$$A\text{-}(X\text{-}Y\text{-}CO)_m(O\text{-}B\text{-}CO)_nOH \qquad (1)$$

wherein

A is a moiety containing a terminating ethylenic bond with one or two adjacent carbonyl groups;
X is O and m is 1 to 4 or X is N and m is 1;
Y is $C_{1-18}$-alkylene or $C_{2-18}$-alkenylene;
B is $C_{2-6}$-alkylene; n is 0 to 5;
provided that when A contains two carbonyl groups adjacent to the ethylenic group, X is N, for example wherein the compound is selected from β-carboxy ethylacrylate, β-carboxyhexylmaleimide, 10-carboxydecylmaleimide, 5-carboxy pentyl maleimide and β-acryloyloxypropanoic acid.

**8.** Method according to any preceding claim, wherein the inorganic particulate is calcium carbonate, for example, ground calcium carbonate.

**9.** A polymer resin suitable for use in the manufacture of an article therefrom by injection moulding, wherein the polymer resin comprises a mixture of different recycled polymers and from about 5 wt. % to about 20 wt. % compatibilizer comprising inorganic particulate material and a surface treatment agent on a surface of the inorganic particulate material, based on the total weight of the polymer resin, wherein the polymer resin has a MFI @ 2.16 kg/190 °C of equal to or greater than 3.0 g/10 min, and wherein the polymer resin comprises at least about 50 wt. % recycled polyethylene, based on the total weight of the polymer composition, and from about 10 wt. % to about 30 wt. % recycled polypropylene, based on the total weight of the polymer resin.

**10.** Polymer resin according to claim 9, wherein the inorganic particulate material has $d_{50}$ of no greater than about 2.5 μm, for example, no greater than about 1.0 μm, or no greater than about 0.75 μm.

**11.** A polymer resin according to claim 9 or claim 10, wherein the surface treatment agent comprises or is a compound having a formula (1):

$$A\text{-}(X\text{-}Y\text{-}CO)_m(O\text{-}B\text{-}CO)_nOH \qquad (1)$$

wherein

A is a moiety containing a terminating ethylenic bond with one or two adjacent carbonyl groups;
X is 0 and m is 1 to 4 or X is N and m is 1;
Y is $C_{1-18}$-alkylene or $C_{2-18}$-alkenylene;
B is $C_{2-6}$-alkylene; n is 0 to 5;
provided that when A contains two carbonyl groups adjacent to the ethylenic group, X is N.

**12.** A polymer resin according to claim 11, wherein the compound is selected from β-carboxy ethylacrylate, β-carboxyhexylmaleimide, 10-carboxydecylmaleimide, 5-carboxy pentyl maleimide and β-acryloyloxypropanoic acid.

**13.** A polymer resin according to any one of claims 9-12, wherein the compatibilizer comprises inorganic particulate material and an organic linker on a surface of the particulate, wherein the organic linker has an oxygen-containing acid functionality, and wherein the organic linker is a basic form of an organic acid.

**14.** A polymer resin according to any one of claims 9-13, wherein the inorganic particulate is calcium carbonate, for example, ground calcium carbonate.

**15.** An article manufactured by injection moulding a polymer resin according to any one of claims 9-14, or obtainable by the method according to any one of claims 1-8.

**Patentansprüche**

**1.** Verfahren zum Herstellung eines Gegenstands durch Spritzguss, wobei das Verfahren ein Spritzgießen eines Gegenstands aus einem Polymerharz umfasst, wobei das Polymerharz verschiedene Arten von recyceltem Polymer und einen Kompatibilisator, der anorganisches teilchenförmiges Material und ein Oberflächenbehandlungsmittel umfasst, auf einer Oberfläche des anorganischen teilchenförmigen Materials umfasst, und wobei das Polymerharz einen MFI bei 2,16 kg/190 °C gleich wie oder größer als 3,0 g/10 Min. aufweist.

2. Verfahren gemäß Anspruch 1, wobei das Polymerharz Polyethylen und Polypropylen oder ein Gemisch aus verschiedenen Arten von Polyethylen (z. B. HOPE, LOPE und/oder LLOPE) und Polypropylen oder ein Gemisch aus verschiedenen Arten von HOPE und Polypropylen umfasst.

3. Verfahren gemäß Anspruch 1 oder Anspruch 2, wobei:

   das Polymerharz Polypropylen in einer Menge von nicht mehr als etwa 90 Gewichtsprozent, zum Beispiel nicht mehr als etwa 40 Gewichtsprozent, umfasst; und/oder
   das Polymerharz Polyethylen in einer Menge von mindestens etwa 10 Gewichtsprozent, zum Beispiel mindestens etwa 60 Gewichtsprozent, umfasst.

4. Verfahren gemäß einem der vorherigen Ansprüche, wobei das Polymerharz frei von neuem Polymer ist.

5. Verfahren gemäß einem vorherigen Anspruch, wobei der Kompatibilisator in einer Menge von etwa 5 Gewichtsprozent bis etwa 20 Gewichtsprozent, zum Beispiel von etwa 8 Gewichtsprozent bis etwa 12 Gewichtsprozent, vorhanden ist.

6. Verfahren gemäß einem der vorherigen Ansprüche, wobei die anorganischen Teilchen einen $d_{50}$-Wert von nicht mehr als etwa 2,5 μm, beispielsweise nicht mehr als etwa 1,0 μm oder nicht mehr als etwa 0,75 μm, aufweisen.

7. Verfahren gemäß einem der vorherigen Ansprüche, wobei das Oberflächenbehandlungsmittel eine Verbindung mit einer Formel (1) umfasst oder eine solche ist:

$$A\text{-}(X\text{-}Y\text{-}CO)_m(O\text{-}B\text{-}CO)_nOH \qquad (1)$$

   wobei

   A eine Gruppierung ist, die eine terminierende ethylenische Bindung mit einer oder zwei anliegenden Carbonylgruppen enthält;
   X O ist und m 1 bis 4 ist oder X N ist und m 1 ist;
   Y $C_{1-18}$-Alkylen oder $C_{2-18}$-Alkenylen ist;
   B $C_{2-6}$-Alkylen ist; n 0 bis 5 ist;
   mit der Maßgabe, dass, wenn A zwei Carbonylgruppen angrenzend an die ethylenische Gruppe enthält, X N ist, zum Beispiel wobei die Verbindung ausgewählt ist aus β-Carboxyethylacrylat, β-Carboxyhexylmaleimid, 10-Carboxydecylmaleimid, 5-Carboxypentylmaleimid und β-Acryloyloxypropansäure.

8. Verfahren gemäß einem der vorherigen Ansprüche, wo die anorganischen Teilchen Calciumcarbonat, beispielsweise gemahlenes Calciumcarbonat, sind.

9. Polymerharz, das für eine Verwendung bei der Herstellung eines Gegenstands daraus durch Spritzguss geeignet ist, wobei das Polymerharz ein Gemisch aus verschiedenen recycelten Polymeren und von etwa 5 Gewichtsprozent bis etwa 20 Gewichtsprozent Kompatibilisator umfassend anorganisches teilchenförmiges Material und ein Oberflächenbehandlungsmittel auf einer Oberfläche des anorganischen teilchenförmigen Materials, bezogen auf das Gesamtgewicht des Polymerharzes umfasst, wobei das Polymerharz einen MFI bei 2,16 kg/190 °C gleich wie oder größer als 3,0 g/10 Min. aufweist und wobei das Polymerharz mindestens etwa 50 Gewichtsprozent recyceltes Polyethylen, bezogen auf das Gesamtgewicht der Polymerzusammensetzung, und von etwa 10 Gewichtsprozent bis etwa 30 Gewichtsprozent recyceltes Polypropylen, bezogen auf das Gesamtgewicht des Polymerharzes, umfasst.

10. Polymerharz gemäß Anspruch 9, wobei das anorganische teilchenförmige Material einen $d_{50}$ von nicht mehr als etwa 2,5 μm, beispielsweise nicht mehr als etwa 1,0 μm, oder nicht mehr als etwa 0,75 μm aufweist.

11. Polymerharz gemäß Anspruch 9 oder Anspruch 10, wobei das Oberflächenbehandlungsmittel eine Verbindung mit einer Formel (1) umfasst oder eine solche ist:

$$A\text{-}(X\text{-}Y\text{-}CO)_m(O\text{-}B\text{-}CO)_nOH$$

   wobei

A eine Gruppierung ist, die eine terminierende ethylenische Bindung mit einer oder zwei anliegenden Carbonylgruppen enthält;
X O ist und m 1 bis 4 ist oder X N ist und m 1 ist;
Y $C_{1-18}$-Alkylen oder $C_{2-18}$-Alkenylen ist;
B $C_{2-6}$-Alkylen ist; n 0 bis 5 ist;
unter der Bedingung, dass, wenn A zwei Carbonylgruppen anliegend an der Ethylengruppe enthält, X N ist.

**12.** Polymerharz gemäß Anspruch 11, wobei die Verbindung ausgewählt ist aus β-Carboxyethylacrylat, β-Carboxyhexylmaleimid, 10-Carboxydecylmaleimid, 5-Carboxypentylmaleimid und β-Acryloyloxypropansäure.

**13.** Polymerharz gemäß einem der Ansprüche 9-12, wobei der Kompatibilisator anorganisches teilchenförmiges Material und einen organischen Linker auf einer Oberfläche der Teilchen umfasst, wobei der organische Linker eine sauerstoffhaltige Säurefunktionalität aufweist, und wobei der organische Linker eine basische Form einer organischen Säure ist.

**14.** Polymerharz gemäß einem der Ansprüche 9-13, wobei die anorganischen Teilchen Calciumcarbonat, beispielsweise gemahlenes Calciumcarbonat, sind.

**15.** Gegenstand, hergestellt durch Spritzguss eines Polymerharzes gemäß einem der Ansprüche 9-14 oder der durch das Verfahren gemäß einem der Ansprüche 1-8 erlangt werden kann.

## Revendications

**1.** Un procédé de fabrication d'un article par moulage par injection, le procédé comprenant le moulage par injection d'un article à partir d'une résine polymère, dans lequel la résine polymère comprend différents types de polymère recyclé et un agent de compatibilisation comprenant une matière particulaire inorganique et un agent de traitement de surface sur une surface de la matière particulaire inorganique, et dans lequel la résine polymère a un IFC (indice de fluidité à chaud) à 2,16 kg/190 °C égal ou supérieur à 3,0 g/10 min.

**2.** Procédé selon la revendication 1, dans lequel la résine polymère comprend le polyéthylène et le polypropylène, ou un mélange de différents types de polyéthylène (par exemple, PEHD (polyéthylène haute densité), PEBD (polyéthylène basse densité) et / ou PEBDL (polyéthylène basse densité linéaire)) et de polypropylène, ou un mélange de différents types de PEHD et de polypropylène.

**3.** Procédé selon la revendication 1 ou la revendication 2, dans lequel :

la résine polymère comprend le polypropylène dans une quantité ne dépassant pas environ 90 % en poids, par exemple, pas plus d'environ 40 % en poids ; et / ou
la résine polymère comprend le polyéthylène dans une quantité d'au moins environ 10 % en poids, par exemple, au moins environ 60 % en poids.

**4.** Procédé selon l'une quelconque des revendications précédentes, dans lequel la résine polymère est dépourvue de polymère vierge.

**5.** Procédé selon l'une quelconque des revendications précédentes, dans lequel l'agent de compatibilisation est présent dans une quantité d'environ 5 % en poids à environ 20 % en poids, par exemple, d'environ 8 % en poids à environ 12 % en poids.

**6.** Procédé selon l'une quelconque des revendications précédentes, dans lequel la matière particulaire inorganique a un $d_{50}$ non supérieur à environ 2,5 μm, par exemple, non supérieur à environ 1,0 μm ou non supérieur à environ 0,75 μm.

**7.** Procédé selon l'une quelconque des revendications précédentes, dans lequel l'agent de traitement de surface comprend ou est un composé ayant une formule (1) :

$$A\text{-}(X\text{-}Y\text{-}CO)_m(O\text{-}B\text{-}CO)_nOH \qquad (1)$$

dans lequel

A est un fragment contenant une liaison éthylénique terminale avec un ou deux groupes carbonyles adjacents ;
X est O et m est 1 à 4 ou X est N et m est 1 ;
Y est un groupe alkylène en $C_{1-18}$ ou alcénylène en $C_{2-18}$ ;
B est un groupe alkylène en $C_{2-6}$ ; n est 0 à 5 ;
à condition que lorsque A contient deux groupes carbonyles adjacents au groupe éthylénique, X soit N, par exemple dans lequel le composé est choisi parmi le β-carboxy éthylacrylate, le β-carboxyhexylmaléimide, le 10-carboxydécylmaléimide, le 5-carboxy pentyl maléimide et l'acide β-acryloyloxypropanoïque.

**8.** Procédé selon l'une quelconque des revendications précédentes, dans lequel la matière particulaire inorganique est le carbonate de calcium, par exemple, le carbonate de calcium broyé.

**9.** Une résine polymère appropriée pour être utilisée dans la fabrication d'un article à partir de celle-ci par moulage par injection, dans laquelle la résine polymère comprend un mélange de différents polymères recyclés et d'environ 5 % en poids à environ 20 % en poids d'un agent de compatibilisation comprenant une matière particulaire inorganique et un agent de traitement de surface sur une surface de la matière particulaire inorganique, sur la base du poids total de la résine polymère, dans laquelle la résine polymère a un IFC (indice de fluidité à chaud) à 2,16 kg/190 °C égal ou supérieur à 3,0 g/10 min, et dans laquelle la résine polymère comprend au moins environ 50 % en poids de polyéthylène recyclé, sur la base du poids total de la composition polymère, et d'environ 10 % en poids à environ 30 % en poids de polypropylène recyclé, sur la base du poids total de la résine polymère.

**10.** Résine polymère selon la revendication 9, dans laquelle la matière particulaire inorganique a un $d_{50}$ non supérieur à environ 2,5 μm, par exemple, non supérieur à environ 1,0 μm, ou non supérieur à environ 0,75 μm.

**11.** Une résine polymère selon la revendication 9 ou la revendication 10, dans laquelle l'agent de traitement de surface comprend ou est un composé ayant une formule (1) :

$$A\text{-}(X\text{-}Y\text{-}CO)_m(O\text{-}B\text{-}CO)_nOH \qquad (1)$$

dans laquelle

A est un fragment contenant une liaison éthylénique terminale avec un ou deux groupes carbonyles adjacents ;
X est O et m est 1 à 4 ou X est N et m est 1 ;
Y est un groupe alkylène en $C_{1-10}$ ou alcénylène en $C_{2-18}$ ;
B est un groupe alkylène en $C_{2-6}$ ; n est 0 à 5 ;
à condition que lorsque A contient deux groupes carbonyles adjacents au groupe éthylénique, X soit N.

**12.** Une résine polymère selon la revendication 11, dans laquelle le composé est choisi parmi le β-carboxy éthylacrylate, le β-carboxyhexylmaléimide, le 10-carboxydécylmaléimide, le 5-carboxy pentyl maléimide et l'acide β-acryloyloxypropanoïque.

**13.** Une résine polymère selon l'une quelconque des revendications 9 à 12, dans laquelle l'agent de compatibilisation comprend une matière particulaire inorganique et un lieur organique sur une surface de la matière particulaire, dans laquelle le lieur organique a une fonctionnalité acide contenant de l'oxygène, et dans laquelle le lieur organique est une forme basique d'un acide organique.

**14.** Une résine polymère selon l'une quelconque des revendications 9 à 13, dans laquelle la matière particulaire inorganique est le carbonate de calcium, par exemple, le carbonate de calcium broyé.

**15.** Un article fabriqué par moulage par injection d'une résine polymère selon l'une quelconque des revendications 9 à 14, ou pouvant être obtenu par le procédé selon l'une quelconque des revendications 1 à 8.

FIGURE 1

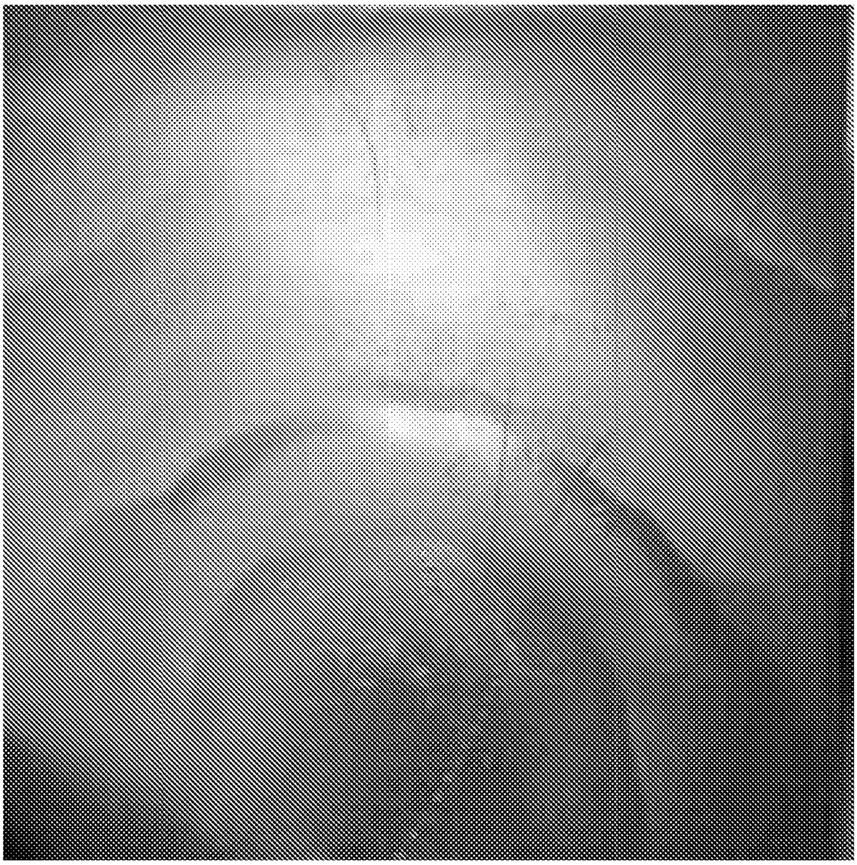

FIGURE 2

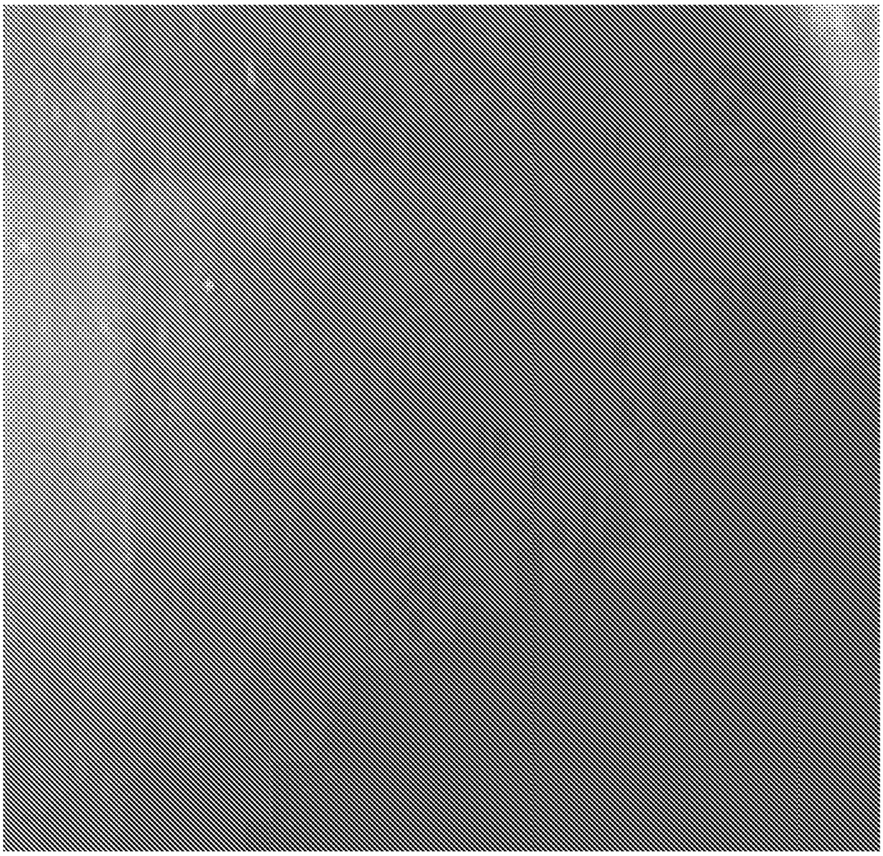

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2610290 A1
- WO 2016038110 A2
- WO 2016042306 A1
- EP 1495074 A1
- US 2013046034 A1
- US 7732514 A
- US 4267365 A
- US 3888912 A
- EP 614948 A


### Non-patent literature cited in the description


- Paper Coating Pigments. *TAPPI Monograph Series No 30,* 34-35